# EUROPÄISCHE PATENTSCHRIFT

(11) **EP 1 632 307 B1**
(45) Veröffentlichungstag und Bekanntmachung des Hinweises auf die Patenterteilung: **30.04.2008**
(21) Anmeldenummer: 05017733.6
(22) Anmeldetag: 16.08.2005
(51) Int. Cl.: B23K 37/053, B23K 11/087, B23K 11/06, B23K 26/26, B23K 26/24, B23K 101/12

(54) **Verfahren und Vorrichtung zum Überlappungsschweissen von rohrförmigen Blechkörpern**
Method and device for overlapp welding of tubular sheetmetal components
Méthode et appareil pour soudage par recouvrement de tôles tubulaires

(30) Priorität: 02.09.2004 CH 14552004
(43) Veröffentlichungstag der Anmeldung: 08.03.2006
(73) Patentinhaber: Soudronic AG, 8962 Bergdietikon (CH)
(72) Erfinder: Peter, Gysi, CH-5454 Bellikon (CH); Bugmann Franz, ch-8953 Dietikon (CH)
(74) Vertreter: Blum, Rudolf Emil

(56) Entgegenhaltungen:
- EP-A- 0 701 878
- JP-A- 48 094 659
- US-A- 4 525 617
- US-A1- 2002 033 385

## Beschreibung

Die Erfindung betrifft ein Verfahren und eine Vorrichtung zum Überlappungsschweissen von rohrförmigen Blechkörpern, insbesondere Behälterzargen gemäß den Oberbegriffen der Ansprüche 1 und 10. Ein derartiges Verfahren und eine derartige Vorrichtung sind aus US-A-4 525 617 bekannt.

Rohrförmige Hohlkörper, insbesondere Behälterzargen, können in kleinen Serien auf halbautomatischen Schweissmaschinen mit einer überlappenden Längsnaht geschweisst werden. In der Regel erfolgt dabei eine Widerstandsschweissung mit Schweissrollen und Zufuhr einer drahtförmigen Elektrode. Zur Erzeugung der Überlappung der Randbereiche des gerundeten Bleches zur Bildung des Blechkörpers werden dessen Längskanten in eine sogenannte Z-Schiene eingeführt, die die Überlappung vorgibt. Aus der Z-Schiene wird der Blechkörper in den Schweissbereich gefördert, um die entsprechend überlappenden Längskanten zu schweissen. Für ein solches Vorgehen ist z.B. eine Führungs- und Klemmvorrichtung gemäss DE-A-103 13 298 bekannt. Mit dieser soll eine geringe Überlappungsbreite von 1-2 mm auch bei halbautomatischen Schweissmaschinen, bei denen das Schweissgut von einer Bedienungsperson gehandhabt wird, erzielt werden. Damit soll eine sogenannte Butterfly-Naht mit vom Zargenrumpf abstehenden Kanten vermieden werden. Aus EP-A-0 701 878 ist es beim Stumpfschweissen von Rohren bekannt, diese von oben her in einen einstellbaren Spanngurt einzubringen und mit diesem zu positionieren.

In US-A-4 525 617 sind ein Verfahren und eine Vorrichtung zur Nahtverschweissung eines rohrförmigen Blechkörpers beschrieben. Die Längskanten des Blechkörpers sind in eine Z-Schiene eingebracht und werden entlang dieser geführt. Der Blechkörper wird von einem Haltewerkzeug gehalten, das konkav ausgebildete Kontaktplatten bzw. Kontaktrollen umfasst.

Der Erfindung liegt die Aufgabe zugrunde beim Überlappungsschweissen auf halbautomatischen Schweissmaschinen den Überlappungsbereich reproduzierbar und auf einfache Weise mit geringer Breite, von z.B. 0,8-1,5 mm, erzielen zu können, und eine einfache Handhabung zu ermöglichen.

Dies wird mit dem Verfahren gemäss Anspruch 1 und der Vorrichtung nach Anspruch 10 erreicht.

Dadurch, dass beim Überlappungsschweissen mit Z-Schiene ein Mantelwerkzeug vorgesehen wird, das den zu schweissenden Blechkörper praktisch vollständig, d.h. von nahe der einen Z-Schienenseite zu nahe der anderen Z-Schienenseite umschliesst, und dies durch einen vorgeformten, d.h. entsprechend der Form und dem Durchmesser des zu schweissenden Körpers vorgeformt angepassten, einen öffen- und schliessbaren Mantel um den Körper bildendes Werkzeug ausführt, wird einerseits ein präzises und gleichmässiges Andrücken an die Z-Schiene erzielt, wobei andererseits auch dünnwandige Körper keine von der gewünschten Rohrform abweichende Verformung ausserhalb der Z-Schiene ausführen können. Dadurch, dass solche Verformungen nicht zugelassen werden, und gerade auch diametral gegenüberliegend dem Schweissbereich unterbunden werden, kann der Überlappungsbereich präzise eingehalten und dadurch sehr klein gehalten werden. Auch sehr dünnwandige zu schweissende Blechhohlkörper lassen sich durch das Mantelwerkzeug ohne die Gefahr von Eindrücken oder Ausbeulungen fixieren und bereits bedruckte Bleche, zur Herstellung bedruckter Zargen, werden nicht beschädigt. Durch ein Einführen in ein derartiges Mantelwerkzeug und das Positionieren in der Z-Schiene und das Schweissen mittels des Mantelwerkzeuges wird ein einfach einzustellendes Schweisswerkzeug bevorzugt für die Längsquetschschweissnaht von zylindrischen Zargenrümpfen in einem grossen Durchmesserbereich von z.B. 52-500 mm mit Überlappungen im Bereich von 0,8-1,5 mm geschaffen. Anstelle der bekannten aufwendigen Kalibrierkränze mit Diabolorollen oder Rollenleisten oder den üblichen Klemmsystemen für die Schweisskanten wird ein einfaches Mantelwerkzeug vorzugsweise aus einem dünnen Blechzuschnitt geschaffen, das die kratzerfreie Führung und Positionierung des Schweissgutes sicherstellt und zudem die einfache Beladung der Schweissmaschine ermöglicht.

Bevorzugterweise ist das Mantelwerkzeug auf die maximale Schweisslänge der Überlappungsschweissmaschine abgestimmt, so dass ein Blechkörper mit der maximal möglichen Schweisslänge vollständig (von Ende zu Ende) im Mantelwerkzeug aufgenommen werden kann. Bevorzugterweise wird weiter das Mantelwerkzeug so ausgeführt, dass es nicht nur von nahe der Z-Schiene auf den Blechkörper einwirkt, sondern sogar in der Z-Schiene selber, wozu das Mantelwerkzeug mit Vorsprüngen vorzugsweise mit Leisten, an seinen Längskanten versehen ist, welche bis in die Z-Schiene hineinreichen. Bevorzugterweise weist das Mantelwerkzeug mindestens einen Endanschlag auf, um ein definiertes Einbringen des Blechkörpers in das geöffnete Mantelwerkzeug bis zu dem Endanschlag zu ermöglichen. Vorteilhafterweise sind dazu mindestens zwei Endanschläge vorgesehen, wobei diese beidseits der vertikalen Mittellängsebene des Mantelwerkzeuges angeordnet sind, um eine gleichmässige Endposition des Blechkörpers im Mantelwerkzeug zu erzielen. Bevorzugt ist mindestens ein weiterer einstellbarer Anschlag vorgesehen, um kürzere und auch sehr kurze Hohlkörper (Ringe) mit definiertem Endanschlag einbringen zu können. Die Einstellung solcher weiterer Anschläge kann in Stufen oder stufenlos erfolgen. Ein bevorzugtes Mantelwerkzeug ist aus einem einzigen, vorgebogenen und entsprechend der zu schweissenden Blechkörper dimensionierten Blechzuschnitt gebildet, der gegebenenfalls noch mit den erwähnten Vorsprüngen bzw. Leisten zum Eingriff in die Z-Schiene versehen ist. Dieses Mantelwerkzeug kann aufgrund seiner Elastizität durch beliebige Betätigungselemente zur Öffnung aufgespreizt und zur Schliessung in seine vorgegebene Rundform gebracht werden. Ein weiter bevorzugtes Mantelwerkzeug ist indes aus zwei vorgeformten Halbschalen gebildet, die mittels eines Verbindungsstückes, das in der Regel der Schweisszone diametral entgegengesetzt liegt, miteinander verbunden sind. Auch ein solches Mantelwerkzeug kann durch die Elastizität der beiden Halbschalen geöffnet und geschlossen werden. Der mindestens eine bevorzugte einstellbare Anschlag kann an dem Verbindungsstück angeordnet sein. Weiter ist es bevorzugt, wenn das Mantelwerkzeug motorisch synchron zur Schweissgeschwindigkeit angetrieben in Schweissrichtung verfahren wird, um den Blechkörper mit der korrekten Geschwindigkeit durch die Schweisszone zu bewegen, ohne dass die Bedienungsperson das Mantelwerkzeug mit dem darin angeordneten Blechkörper bewegen muss. Weiter ist es bevorzugt, wenn das Mantelwerkzeug an der Einführöffnung bzw. stirnseitig an seiner Unterseite mit mindestens einem Vorsprung versehen ist, der einen Abstellbereich für den Blechkörper bildet und damit das manuelle Beladen des Mantelwerkzeuges wesentlich erleichtert. Ferner ist im Mantelwerkzeug an der Einführöffnung mindestens eine Ausnehmung angeordnet und vorzugsweise sind zwei Ausnehmungen beidseits der vertikalen Mittelebene des Werkzeuges angeordnet, um die Beladung durch Halten des Blechkörpers von Hand "im Inneren" des Mantelwerkzeuges zu erleichtern. Das Mantelwerkzeug kann bei entsprechendem Zuschnitt und Vorformung auch für im Querschnitt nicht runde und auch für konische Blechkörper verwendet werden.

Im folgenden werden Ausführungsbeispiele der Erfindung anhand der Zeichnungen näher erläutert. Dabei zeigt
Figur 1 eine stark vereinfachte Seitenansicht einer halbautomatischen Schweissmaschine;
Figur 2 eine schematische schaubildliche Ansicht eines Teils der Schweissmaschine und des Mantelwerkzeuges;
Figur 3 eine Abwicklung des Mantelwerkzeuges; und
Figur 4 eine vereinfachte stirnseitige Ansicht einer weiteren Ausführungsform des Mantelwerkzeuges.

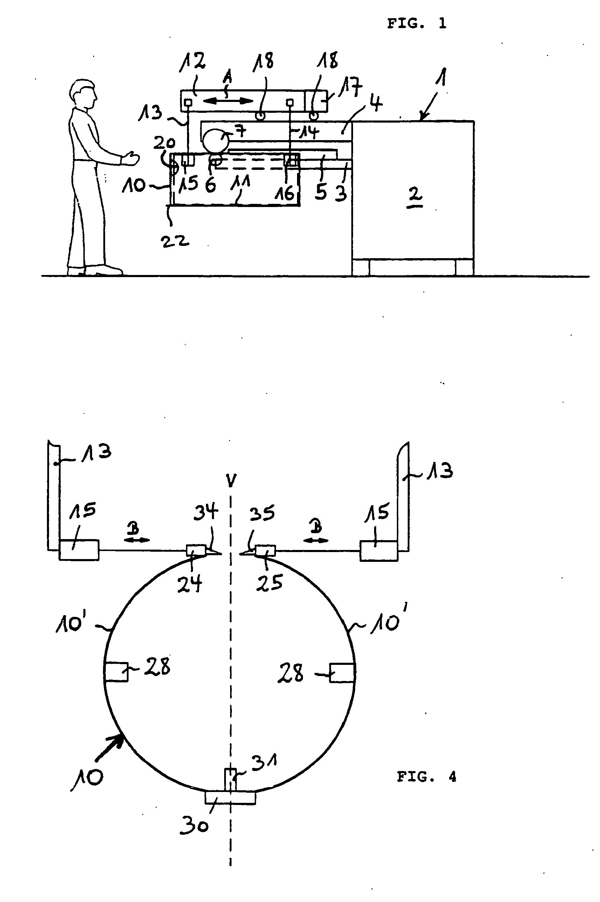

Figur 1 zeigt in grob schematisierter Weise eine halbautomatische Schweissmaschine zur Erzeugung von Überlappungsschweissnähten, welche insbesondere zum Schweissen der Längsnähte von rohrförmigen Blechkörpern, insbesondere Gebindezargen eingesetzt wird. Die halbautomatische Schweissmaschine kann z.B. eine Widerstands-Nahtschweissmaschine vom Typ AFB 002 der Firma Soudronic, Bergdietikon, Schweiz, sein. Die vorliegende Erfindung ist aber bei beliebigen Schweissmaschinen mit einer Z-Schiene zur Erzeugung der überlappenden Schweissnaht einsetzbar. Die Schweissmaschine 1 ist nur schematisch mit ihrem Maschinengestell 2 dargestellt, an welchem der Unterarm 3 der Schweissmaschine mit der unteren Schweissrolle 6 angeordnet ist. Ebenfalls am Maschinengestell ist der obere Schweissarm 4 mit der oberen Schweissrolle 7 angeordnet. Nicht gezeigt ist die Drahtführung und der Drahtvorrat für die üblicherweise eingesetzte Drahtelektrode, welche auf den Schweissrollen abläuft. Dies ist von den handelsüblichen Schweissmaschinen her bekannt und muss hier nicht näher erläutert werden. Ebenfalls dem Fachmann wohl bekannt ist es, eine sogenannte Z-Schiene 5 zu verwenden, um die Überlappung der Längsränder des zu schweissenden Blechkörpers zu bewirken. Die Z-Schiene 5 ist daher hier nur schematisch angedeutet. Sie endet in Schweissrichtung, welche die Richtung auf die dargestellt Bedienungsperson hin ist, kurz vor den Schweissrollen, wo die Längskanten die definierte Überlappung eingenommen haben müssen.

Gemäss der vorliegenden Erfindung wird nun ein Mantelwerkzeug 10 verwendet, um den zu schweissenden rohrförmigen Blechkörper 11, der in Figur 1 in unterbrochener Linie als im Mantelwerkzeug 10 liegender Hohlkörper angedeutet ist, in die Schweissmaschine zu laden und der Schweissung positioniert zuzuführen. Figur 1 zeigt eine Stellung des Mantelwerkzeuges 10, bei welchem bereits ungefähr die Hälfte des Blechkörpers 11 geschweisst ist. Bei der bevorzugten gezeigten Ausführungsform ist das Mantelwerkzeug 10 an einem verfahrbaren Wagen 12 angeordnet, welcher sowohl in Schweissrichtung als entgegen der Schweissrichtung verfahrbar ist, was mit dem Pfeil A angedeutet wird. Der Wagen 12 ist am Maschinengestell 2 verfahrbar angeordnet, was durch die Rollen 18 nur schematisch angedeutet werden soll. Ein Antrieb 17 für den Wagen ist ein beliebiger motorischer Antrieb, welcher mit dem Antrieb der Schweissrollen 6, 7 bzw. der Drahtelektrode so synchronisiert ist, dass vorzugsweise der Vorschub des Wagens 12 in Schweissrichtung gleich schnell erfolgt wie die Schweissgeschwindigkeit. An dem Wagen 12 ist über nur angedeutete Befestigungsmittel 13 und 14 das bereits genannte Mantelwerkzeug 10 befestigt, so dass dieses mit dem Wagen zusammen bewegt wird. Das Mantelwerkzeug 10 ist durch beliebige Bewegungsmittel 15 und 16 öffenbar und wieder schliessbar, was noch erläutert wird.

In der Beladestellung, wenn der Wagen 12 ganz nach hinten, von der Bedienungsperson weg, gefahren ist, liegen die Längsränder des Mantelwerkzeuges 10 im Bereich der Z-Schiene 5 und noch beabstandet von den Schweissrollen 6, 7. In dieser Stellung führt die Bedienungsperson den vorgeformten, zu schweissenden Blechkörper 11 in das Mantelwerkzeug 10 ein. Ein daran befindlicher Vorsprung 22 erleichtert das Einführen, indem der gerundete Blechzuschnitt des Blechkörpers auf diesem Vorsprung abgelegt werden kann, um danach den Blechkörper von der Stirnseite her in das geöffnete, einen aufgespreizten zylinderförmigen Mantel bildende Mantelwerkzeug 10 einzuführen. Das vollständige Einführen wird weiter durch Ausnehmungen 20 und 21 im Mantelwerkzeug erleichtert, wodurch der Blechkörper vollständig nach hinten bis zu in Figur 1 nicht dargestellten Endanschlägen am Mantelwerkzeug oder allenfalls an der Schweissmaschine geschoben werden kann. Durch die Lage und Dimension des Mantelwerkzeuges 10 ergibt sich damit auch ein Einführen der Längskanten des zu schweissenden Blechkörpers in die jeweiligen Nuten der Z-Schiene, wie dies grundsätzlich bekannt ist. Durch das Mantelwerkzeug, das in diesem Zustand noch offen ist, bzw. mit seinen Längsseiten auseinanderklafft, wird das Einführen in die Z-Schiene wesentlich erleichtert. Ist der zu schweissende Blechkörper in das Mantelwerkzeug eingeführt, so wird dieses durch die erwähnten Betätigungselemente 15 und 16 geschlossen bzw. die Längsränder des Mantelwerkzeuges werden in Richtung der Z-Schiene bewegt, was das Positionieren der Längsränder des eingeschobenen Blechkörpers in der Z-Schiene bewirkt. Danach wird das Mantelwerkzeug nach vorne (in Richtung auf die Bedienungsperson hin bzw. in Schweissrichtung) verfahren und die Schweissmaschine 1 wird zur Schweissung angetrieben. Das Mantelwerkzeug 10 bildet dabei in geschlossener Form einen Spalt zwischen seinen Längsrändern aus, in welchem die Schweissrollen die Schweissung auf bekannte Weise durchführen können und die durch die Z-Schiene in Überlappung gebrachten Längsränder des Blechkörpers schweissen. Der Blechkörper selber wird durch das Mantelwerkzeug, an dessen Innenfläche der Blechkörper anliegt, reibschlüssig bzw. gegebenenfalls zusätzlich durch die Endanschläge formschlüssig durch die Schweissrollen geführt. Ist die Schweissung beendet, indem die gesamte Längsnaht des Blechkörpers fertig geschweisst ist, so befindet sich das Mantelwerkzeug vor den Schweissrollen bei der Bedienungsperson und kann geöffnet werden, so dass die Bedienungsperson den geschweissten Blechkörper entnehmen kann.

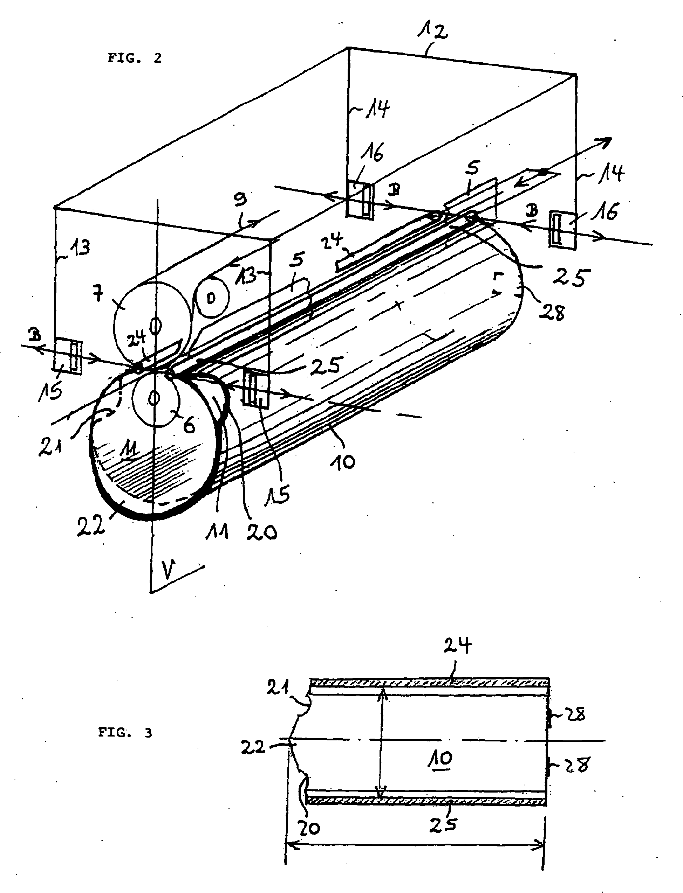

Figur 2 zeigt in schematischer schaubildlicher Ansicht das Mantelwerkzeug 10, welches an dem nur angedeuteten Wagen 12 mit den Befestigungselementen 13, 14 befestigt ist und welches mit den Betätigungselementen 15, 16 geöffnet und geschlossen werden kann. Das Öffnen und das Schliessen des Mantelwerkzeuges bedeutet dabei, dass dessen Längskanten, welche in der Zeichnung als stabförmige Endbereiche 24 und 25 dargestellt sind, voneinander weg bewegt werden können, um das Werkzeug zu öffnen und aufeinander zu bewegt werden, um das Werkzeug zu schliessen. Das geschlossene Werkzeug ist dabei mit seinen Längsrändern 24, 25 nahe benachbart der Z-Schiene 8, welche in der Zeichnung nur stark vereinfacht angedeutet ist. Das Mantelwerkzeug 10 ist in seiner Form und in seiner Grösse an den zu schweissenden Blechkörper angepasst, so dass dieser im geschlossenen Mantelwerkzeug im wesentlichen (abgesehen von der Z-Schiene) vollumfänglich umfasst wird, so dass der zu schweissende Blechkörper ringsherum durch das Mantelwerkzeug abgestützt und gehalten wird. In der Figur ist der zu schweissende Blechkörper 11 im geschlossenen Mantelwerkzeug ersichtlich, welches ferner den erwähnten Vorsprung 22 und die Ausnehmungen 20 und 21 aufweist. Ferner sind die Endanschläge 28 in der Figur angedeutet. Ebenso sind die Schweissrollen 6 und 7 sowie der obere Schweissdraht 9 teilweise ersichtlich.

Zur Öffnung des Mantelwerkzeuges aus seiner in Figur 2 gezeichneten geschlossenen Stellung werden die Betätigungselemente 15 und 16, welches beliebige Betätigungselemente sein können, welche eine Bewegung entsprechend der Pfeile B ausführen können, um das Mantelwerkzeug durch ein Aufeinanderzu bewegen seiner Längskanten 24, 25 zu schliessen bzw. durch ein Voneinanderweg bewegen dieser Längskanten zu öffnen. Zum Einführen des zu schweissenden Blechkörpers bzw. zur Entnahme des geschweissten Blechkörpers bedarf es in der Regel nur einer geringen Öffnungs- bzw. Schliessbewegung von einigen Zentimetern. Das vorzugsweise aus einem Blechzuschnitt gefertigte Mantelwerkzeug 10 ist dabei genügend elastisch, um diese Bewegung ohne weiteres zuzulassen.

Figur 3 zeigt eine entsprechende Abwicklung des Mantelwerkzeuges 10, worin gleiche Bezugszeichen die bereits erwähnten Teile bezeichnen.

Figur 4 zeigt zur Erläuterung weiterer bevorzugter Merkmale eine Ansicht des Mantelwerkzeuges von vorne bzw. seiner Stirnseite her. Einerseits ist dabei ersichtlich, dass das Mantelwerkzeug an seine Längskanten 24, 25 anschliessende Vorsprünge 34, 35 aufweisen kann, welche sich ebenfalls über die ganze Längserstreckung des Mantelwerkzeuges erstrecken können oder mit Unterbrüchen nur über einen Teil derselben, und welche Vorsprünge z.B. leistenförmig ausgebildet sind und allenfalls aus einem anderen Werkstoff als das Mantelwerkzeug selber bestehen können. Diese Vorsprünge 34 und 35 greifen dabei vorzugsweise ein Stück weit z.B. einige Zehntelsmillimeter weit in die Z-Schiene ein und bewirken ein besseres Positionieren des zu schweissenden Blechkörpers bzw. von dessen Längsrändern in der Z-Schiene. Auch die Vorsprünge 34, 35 sind aber bei geschlossenem Mantelwerkzeug 10 soweit voneinander beabstandet, dass der Schweissbereich für die Schweissrollen frei bleibt. Bei einer anderen Ausführungsform könnte das Mantelwerkzeug aus so ausgeführt sein, dass seine Längsränder 24 und 25 direkt so ausgestaltet sind, dass sie entsprechend in die Z-Schiene hineingreifen können. In der gezeigten Ausführungsform sind die Längsränder 24, 25 allerdings wiederum stabartig und vergrössert ausgeführt, um den Angriffsbereich für die Betätigungselemente 15 (bzw. weiter hinten liegend und daher in der Figur nicht ersichtlich 16) zu bilden. Die beschriebene Ausgestaltung der Längsränder mit den Vorsprüngen kann mit dem einstückigen Mantelwerkzeug der Figuren 2 und 3 gebildet sein. Figur 4 zeigt aber eine weitere Ausführungsform des Mantelwerkzeuges, worin diese zwei Halbschalen 10' aufweist, welche durch ein Verbindungsmittel 30 miteinander verbunden sind. Dieses liegt vorzugsweise in der Vertikalmittelebene V des Mantelwerkzeuges 10 und besteht z.B. aus einer Leiste aus Kunststoff oder einem anderen Material. Die beiden Halbschalen 10' aus Blech erlauben durch ihre Elastizität wiederum das Öffnen und Schliessen des Mantelwerkzeuges 10.

Dieses weist vorzugsweise mindestens einen weiteren verstellbaren Endanschlag 31 auf, welcher entlang des Mantelwerkzeuges verstellbar ist, um auch kürzere Blechkörper im Mantelwerkzeug zu positionieren und damit zu schweissen. Es können dabei im Mantelwerkzeug ohne weiteres auch sehr kurze ringförmige Blechkörper geschweisst werden, da diese durch das Mantelwerkzeug genauso gut positioniert werden wie lange Blechkörper und durch das Mantelwerkzeug auch stabilisiert werden. Entsprechend können verstellbare (stufenlos oder stufenweise) Endanschläge oder nur ein Endanschlag 31 eingestellt werden, um das Beladen auch mir sehr kurzen Blechkörpern zu ermöglichen.

Durch das Einstellmass c, welches in Figur 2 dargestellt ist, und welches durch die Betätigungselemente 15 und 16 nach Wunsch einstellbar ist, was durch das elastische Mantelwerkzeug 10 ermöglicht wird, kann auf die Positionierung der Längskanten des zu schweissenden Blechkörpers in der Z-Schiene Einfluss genommen werden. Dies ist wie gesagt auch durch die Vorsprünge 34 und 35 möglich, die ebenfalls durch die Elemente 15 und 16 positioniert werden.

Das Mantelwerkzeug 10 besteht wie erwähnt aus einem Blechzuschnitt. Vorzugsweise ist das Blech dabei vollständig geschlossen, so dass der zu schweissende Blechkörper 11 ringsherum gleichmässig abgestützt wird und sich an das Mantelwerkzeug anlegen kann, wodurch die Gefahr von Ausformungen des Blechkörpers 11, welche die Positionierung und die Überlappung durch die Z-Schiene stören könnten, vollständig eliminiert ist. Das Werkzeug könnte aber auch an seiner Mantelfläche einige Ausnehmungen aufweisen und so z.B. gitterförmig oder netzförmig ausgestaltet sein. Wichtig ist dabei jedenfalls die im wesentlichen vollständige Umfassung des Blechkörpers 11, so dass die genannte Gefahr der Verformung nicht besteht.

## Patentansprüche

1. Verfahren zum Überlappungsschweissen von rohrförmig vorgebogenen Blechkörpern (11), insbesondere Behälterzargen, wobei ein Blechkörper (11) mittels einer Z-Schiene (5) mit seinen gegenüberliegenden Längskanten im Schweissbereich zur definierten Überlappung gebracht und dort geschweisst wird, **dadurch gekennzeichnet, dass** der Blechkörper beim Einführen in die Schweissmaschine (2) in ein geöffnetes, der Rohrform vorgeformt angepasstes Mantelwerkzeug (10) von dessen Stirnseite her eingeführt wird, wobei das Mantelwerkzeug ein durch eine Öffnungs- und Schliessvorrichtung (13-16) elastisch verformbarer Hohlkörper ist, der entlang der Z-Schiene positioniert ist, so dass die Längskanten des Blechkörpers beim Einbringen in das Mantelwerkzeug in die Z-Schiene einbringbar sind, dass das Mantelwerkzeug geschlossen wird, um den Blechkörper, abgesehen vom Bereich der Z-Schiene zu umfassen, und die Längskanten des Blechkörpers an die Z-Schiene anzudrücken, und dass das Mantelwerkzeug mit dem darin befindlichen Blechkörper in Schweissrichtung verfahren wird, um den vom Mantelwerkzeug umgebenen Blechkörper zu schweissen, und dass nach beendetem Schweissvorgang der Mantelkörper durch die Öffnungs- und Schliessvorrichtung geöffnet und der Blechkörper entnommen wird.

2. Verfahren nach Anspruch 1, **dadurch gekennzeichnet, dass** die Länge des Mantelwerkzeuges länger ist als die Länge des zu schweissenden Blechkörpers.

3. Verfahren nach Anspruch 1 oder 2, **dadurch gekennzeichnet, dass** das Mantelwerkzeug den Blechkörper entlang seiner ganzen Wandung umschliesst, abgesehen von einem Bereich in der oder nahe der Z-Schiene.

4. Verfahren nach Anspruch 3, **dadurch gekennzeichnet, dass** das Mantelwerkzeug beim Schliessen bis in die Z-Schiene hineinreicht.

5. Verfahren nach einem der Ansprüche 1 bis 4, **dadurch gekennzeichnet, dass** das Mantelwerkzeug aus einem einzigen, rohrförmig gebogenen Blechzuschnitt gebildet ist, oder dass das Mantelwerkzeug aus zwei, mit einem Verbindungsmittel (30) verbundenen Halbschalen (10') gebildet ist und gegebenenfalls jeweils mit in die Z-Schiene reichenden Vorsprüngen (34, 35), insbesondere in der Form von Randleisten versehen ist.

6. Verfahren nach einem der Ansprüche 1 bis 5, **dadurch gekennzeichnet, dass** das Mantelwerkzeug mit mindestens einem in seinen Innenraum ragenden Endanschlag (28) versehen ist, und vorzugsweise zwei, beidseits der Mittelvertikalebene liegende Endanschläge aufweist, gegen welchen bzw. gegen welche der Blechkörper beim Einführen in das Mantelwerkzeug geschoben wird.

7. Verfahren nach einem der Ansprüche 1 bis 6, **dadurch gekennzeichnet, dass** mindestens ein Endanschlag (31) vorgesehen ist, gegen welchen der Blechkörper beim Einführen in das Mantelwerkzeug geschoben wird, welcher Endanschlag in seiner Position in Schweissrichtung einstellbar ist und/oder wobei mehrere, in Schweissrichtung hintereinander liegende Endanschläge vorgesehen sind, welche wahlweise in den Innenraum ragend positionierbar sind.

8. Verfahren nach einem der Ansprüche 1 bis 7, **dadurch gekennzeichnet, dass** das Mantelwerkzeug an seiner Unterseite mindestens einen in Schweissrichtung vorstehenden Vorsprung (22) aufweist, auf welchen der zu schweissende Blechkörper beim Einführen in das Mantelwerkzeug aufgelegt wird.

9. Verfahren nach einem der Ansprüche 1 bis 8, **dadurch gekennzeichnet, dass** das Mantelwerkzeug stirnseitig beidseits seiner Vertikalmittelebene (V) Ausnehmungen (20,21) aufweist, mittels welchen das vollständige Einführen des Blechkörpers entgegen der Schweissrichtung in das Mantelwerkzeug erleichtert wird.

10. Vorrichtung zum Überlappungsschweissen von rohrförmig vorgebogenen Blechkörpern (11), insbesondere Behälterzargen, mit
einer Z-Schiene (5), mittels derer ein Blechkörper (11) mit seinen gegenüberliegenden Längskanten im Schweissbereich zur definierten Überlappung bringbar und dort schweissbar ist;
mit einem Mantelwerkzeug (10), das mit dem darin befindlichen Blechkörper (11) in Schweissrichtung verfahrbar ist, um den vom Mantelwerkzeug (10) umgebenen Blechkörper (11) zu schweissen, wobei der Blechkörper (11) in das geöffnete Mantelwerkzeug (10) von dessen Stirnseite her in die Vorrichtung einführbar ist;
mit einer Schliessvorrichtung (13-16) zum Schliessen des Mantelwerkzeuges (10), **dadurch gekennzeichnet,**
**dass** das Mantelwerkzeug (10) ein durch eine Öffnungs- und Schliessvorrichtung (13-16) elastisch verformbarer, der Rohrform vorgeformt anpassbarer Hohlkörper ist, der entlang der Z-Schiene (5) positionierbar ist, sodass die Längskanten des Blechkörpers (11) beim Einbringen in das Mantelwerkzeug (10) in die Z-Schiene (5) einbringbar sind, und
**dass** das Mantelwerkzeug (10) schliessbar ist, um den Blechkörper (11), abgesehen vom Bereich der Z-Schiene (5) zu umfassen, und die Längskanten des Blechkörpers (11) an die Z-Schiene (5) anzudrücken.

11. Vorrichtung nach Anspruch 10, **dadurch gekennzeichnet, dass** die Länge des Mantelwerkzeuges länger ist als die Länge des zu schweissenden Blechkörpers.

12. Vorrichtung nach Anspruch 10 oder 11, **dadurch gekennzeichnet, dass** das Mantelwerkzeug den Blechkörper entlang seiner ganzen Wandung umschliesst, abgesehen vom Bereich in der und nahe der Z-Schiene.

13. Vorrichtung nach Anspruch 12, **dadurch gekennzeichnet, dass** das Mantelwerkzeug beim Schliessen bis in die Z-Schiene hineinreicht.

14. Vorrichtung nach einem der Ansprüche 10 bis 13, **dadurch gekennzeichnet, dass** das Mantelwerkzeug (10) aus einem einzigen, rohrförmig gebogenen Blechzuschnitt gebildet ist, oder dass das Mantelwerkzeug aus zwei, mit einem Verbindungsmittel (30) verbundenen Halbschalen (10') gebildet ist und gegebenenfalls jeweils mit in die Z-Schiene reichenden Vorsprüngen (34, 35), insbesondere in der Form von Randleisten versehen ist.

15. Vorrichtung nach einem der Ansprüche 10 bis 14, **dadurch gekennzeichnet, dass** das Mantelwerkzeug mit mindestens einem in seinen Innenraum ragenden Endanschlag (28) versehen ist, und vorzugsweise zwei, beidseits der Mittelvertikalebene liegende Endanschläge aufweist, gegen welchen bzw. gegen welche der Blechkörper beim Einführen in das Mantelwerkzeug geschoben wird.

16. Vorrichtung nach einem der Ansprüche 10 bis 15, **dadurch gekennzeichnet, dass** mindestens ein Endanschlag (31) vorgesehen ist, gegen welchen der Blechkörper beim Einführen in das Mantelwerkzeug geschoben wird, welcher Endanschlag in seiner Position in Schweissrichtung einstellbar ist und/oder wobei mehrere, in Schweissrichtung hintereinander liegende Endanschläge vorgesehen sind, welche wahlweise in den Innenraum ragend positionierbar sind.

17. Vorrichtung nach einem der Ansprüche 10 bis 16, **dadurch gekennzeichnet, dass** das Mantelwerkzeug an seiner Unterseite mindestens einen in Schweissrichtung vorstehenden Vorsprung (22) aufweist, auf welchen der zu schweissende Blechkörper beim Einführen in das Mantelwerkzeug auflegbar ist.

18. Vorrichtung nach einem der Ansprüche 10 bis 17, **dadurch gekennzeichnet, dass** das Mantelwerkzeug stirnseitig beidseits seiner Vertikalmittelebene Ausnehmungen (20,21) aufweist, mittels welchen das vollständige Einführen des Blechkörpers entgegen der Schweissrichtung in das Mantelwerkzeug erleichtert wird.

## Claims

1. A method of overlap welding of sheet metal bodies (11) which are prebent in a tubular shape, in particular container bodies, wherein a sheet metal body (1) is brought into a defined overlapping condition with its oppositely disposed longitudinal edges in the welding region by means of a Z-rail (5) and is welded there, **characterised in that** upon being introduced into the welding machine (2) the sheet metal body is introduced into an opened casing tool (10) which is adapted in a preshaped condition to the tube form, from the end of the casing tool, wherein the casing tool is a hollow body which is elastically deformable by an opening and closing device (13-16) and which is positioned along the Z-rail so that the longitudinal edges of the sheet metal body can be introduced into the Z-rail upon being introduced into the casing tool, that the casing tool is closed in order to embrace the sheet metal body apart from the region of the Z-rail and to press the longitudinal edges of the sheet metal body against the Z-rail, and that the casing tool with the sheet metal body disposed therein is displaced in the welding direction in order to weld the sheet metal body surrounded by the casing tool, and that after the welding operation is concluded the casing body is opened by the opening and closing apparatus and the sheet metal body is removed.

2. A method according to claim 1 **characterised in that** the length of the casing tool is longer than the length of the sheet metal body to be welded.

3. A method according to claim 1 or claim 2 **characterised in that** the casing tool encloses the sheet metal body along its entire wall apart from a region in the or in the proximity of the Z-rail.

4. A method according to claim 3 **characterised in that** the casing tool extends upon closure into the Z-rail.

5. A method according to one of claims 1 to 4 **characterised in that** the casing tool is formed from a single sheet metal blank which is bent in a tubular shape or that the casing tool is formed from two half-shell portions (10') connected by a connecting means (30) and is possibly respectively provided with projections (34, 35) extending into the Z-rail, in particular in the form of edge bars.

6. A method according to one of claims 1 to 3 **characterised in that** the casing tool is provided with at least one end abutment (28) projecting into its interior and preferably has two end abutments disposed on both sides of the central vertical plane, wherein the sheet metal body is pushed against the end abutment or abutments upon being introduced into the casing tool.

7. A method according to one of claims 1 to 6 **characterised in that** there is provided at least one end abutment (31) against which the sheet metal body is pushed upon being introduced into the casing tool, which end abutment is adjustable in its position in the welding direction, and/or wherein there are provided a plurality of end abutments which are disposed in succession in the welding direction and which can be positioned selectively to project into the interior.

8. A method according to one of claims 1 to 7 **characterised in that** at its underside the casing tool has at least one projection (22) which protrudes in the welding direction and on which the sheet metal body to be welded is laid upon being introduced into the casing tool.

9. A method according to one of claims 1 to 8 **characterised in that** at its end on both sides of its vertical central plane (V) the casing tool has openings (20, 21), by means of which complete introduction of the sheet metal body in opposite relationship to the welding direction into the casing tool is facilitated.

10. Device for overlap welding of sheet metal bodies (11) which are prebent in a tubular shape, in particular container bodies, comprising
a Z-rail (5), by means of which a sheet metal body (11) can be brought into a defined overlapping condition with its oppositely disposed longitudinal edges in the welding region and can be welded there;
a casing tool (10) which is displaceable in the welding direction with the sheet metal body (11) disposed therein in order to weld the sheet metal body (11) which is surrounded by the casing tool (10), wherein the sheet metal body (11) can be introduced into the opened casing tool (10) from the end thereof into the apparatus; and
a closing device (13-16) for closing the casing tool (10), **characterised in that**
the casing tool (10) is a hollow body which is elastically deformable by an opening and closing device (13-16) and which can be adapted in a preshaped condition to the tube form and which can be positioned along the Z-rail (5) so that the longitudinal edges of the sheet metal body (11) can be introduced into the Z-rail (5) upon being introduced into the casing tool (10), and
the casing tool (10) is closable to embrace the sheet metal body (11) apart from the region of the Z-rail (5) and to press the longitudinal edges of the sheet metal body (11) against the Z-rail (5).

11. Device according to claim 10 **characterised in that** the length of the casing tool is longer than the length of the sheet metal body to be welded.

12. Device according to claim 10 or claim 11 **characterised in that** the casing tool encloses the sheet metal body along its entire wall apart from the region in the or in the proximity of the Z-rail.

13. Device according to claim 12 **characterised in that** the casing tool extends upon closure into the Z-rail.

14. Device according to one of claims 10 to 13 **characterised in that** the casing tool is formed from a single sheet metal blank which is bent in a tubular shape or that the casing tool is formed from two half-shell portions (10') connected by a connecting means (10) and is possibly respectively provided with projections (34, 35) extending into the Z-rail, in particular in the form of edge bars.

15. Device according to one of claims 10 to 14 **characterised in that** the casing tool is provided with at least one end abutment (28) projecting into its interior and preferably has two end abutments disposed on both sides of the central vertical plane, wherein the sheet metal body is pushed against the end abutment or abutments upon being introduced into the casing tool.

16. Device according to one of claims 10 to 15 **characterised in that** there is provided at least one end abutment (31) against which the sheet metal body is pushed upon being introduced into the casing tool, which end abutment is adjustable in its position in the welding direction, and/or wherein there are provided a plurality of end abutments which are disposed in succession in the welding direction and which can be positioned selectively to project into the interior.

17. Device according to one of claims 10 to 16 **characterised in that** at its underside the casing tool has at least one projection (22) which protrudes in the welding direction and on which the sheet metal body to be welded is laid upon being introduced into the casing tool.

18. Device according to one of claims 10 to 17 **characterised in that** at its end on both sides of its vertical central plane (V) the casing tool has openings (20, 21), by means of which complete introduction of the sheet metal body in opposite relationship to the welding direction into the casing tool is facilitated.

## Revendications

1. Procédé permettant le soudage par recouvrement de corps en tôle (11) précourbés sous forme tubulaire, en particulier des corps de récipients, dans lequel un corps en tôle (11) est amené à faire l'objet d'un recouvrement défini avec ses bords longitudinaux opposés dans la zone de soudage à l'aide d'un rail en Z (5) et soudé à cet endroit, **caractérisé en ce que** le corps en tôle, lorsqu'il est introduit dans la machine à souder (2), est introduit dans un outil d'enveloppement (10) ouvert, adapté de manière préformée à la forme du tube en partant de sa face frontale, sachant que l'outil d'enveloppement est un corps creux pouvant être déformé de manière élastique par un dispositif d'ouverture et de fermeture (13 à 16), qui est positionné le long du rail en Z, de telle sorte que les bords longitudinaux du corps en tôle peuvent être introduits dans le rail en Z lors de l'introduction dans l'outil d'enveloppement, de telle sorte que l'outil d'enveloppement se ferme afin d'envelopper le corps en tôle, hormis la zone du rail en Z, et d'appuyer les bords longitudinaux du corps en tôle sur le rail en Z, et **en ce que** l'outil d'enveloppement est amené à se déplacer dans le sens de soudage avec le corps en tôle qui se trouve à l'intérieur afin de souder le corps en tôle entouré par l'outil d'enveloppement, et **en ce que**, une fois que l'opération de soudage est terminée, l'outil d'enveloppement est ouvert par le dispositif d'ouverture et de fermeture, et le corps en tôle est extrait.

2. Dispositif selon la revendication 1, **caractérisé en ce que** la longueur de l'outil d'enveloppement est supérieure à la longueur du corps en tôle à souder.

3. Procédé selon la revendication 1 ou 2, **caractérisé en ce que** l'outil d'enveloppement entoure le corps en tôle le long de toute sa paroi, hormis une zone dans ou à proximité du rail en Z.

4. Procédé selon la revendication 3, **caractérisé en ce que** l'outil d'enveloppement va jusqu'au rail en Z lors de la fermeture.

5. Procédé selon l'une quelconque des revendications 1 à 4, **caractérisé en ce que** l'outil d'enveloppement est formé par une section de tôle recourbée de manière tubulaire individuelle, ou **en ce que** l'outil d'enveloppement est constitué de deux demi-coques (10') reliées par un moyen de raccordement, et le cas échéant dotées de saillies (34, 35) allant respectivement jusqu'au rail en Z, se présentant en particulier sous la forme de nervures périphériques.

6. Procédé selon l'une quelconque des revendications 1 à 5, **caractérisé en ce que** l'outil d'enveloppement est doté d'au moins une butée d'extrémité (28) faisant saillie dans son espace interne, et présente de préférence deux butées d'extrémité se trouvant des deux côtés du plan vertical médian, contre lesquelles le corps en tôle est poussé lors de l'introduction dans l'outil d'enveloppement.

7. Procédé selon l'une quelconque des revendications 1 à 6, **caractérisé en ce qu'**on prévoit au moins une butée d'extrémité (31), contre laquelle le corps en tôle est poussé lors de l'introduction dans l'outil d'enveloppement, laquelle butée d'extrémité peut être réglée en termes de positionnement dans le sens de soudage et/ou sachant que plusieurs butées d'extrémité se trouvant l'une derrière l'autre dans le sens de soudage sont prévues, lesquelles peuvent être positionnées au choix en faisant saillie dans l'espace interne.

8. Procédé selon l'une quelconque des revendications 1 à 7, **caractérisé en ce que** l'outil d'enveloppement présente, sur sa face inférieure, au moins une saillie (22) dépassant dans le sens de soudage, sur laquelle est déposé le corps en tôle à souder lors de l'introduction dans l'outil d'enveloppement.

9. Procédé selon l'une quelconque des revendications 1 à 8, **caractérisé en ce que** l'outil d'enveloppement présente des évidements (20, 21), du côté frontal, des deux côtés de son plan médian vertical (V), grâce auxquels l'introduction complète du corps en tôle à l'encontre du sens de soudage dans l'outil d'enveloppement est simplifiée.

10. Dispositif permettant le soudage par recouvrement de corps en tôle (11) précourbés tubulaires, en particulier des corps de récipients, comportant :
un rail en Z (5), grâce auquel un corps en tôle (11) est amené à faire l'objet d'un recouvrement défini avec ses bords longitudinaux opposés dans la zone de soudage à l'aide d'un rail en Z (5) et peut être soudé à cet endroit,;
un outil d'enveloppement (10), qui peut être déplacé avec le corps en tôle (11) se trouvant à l'intérieur dans le sens de soudage, afin de souder le corps en tôle (11) entouré par l'outil d'enveloppement (10), sachant que le corps en tôle (11) peut être introduit dans l'outil d'enveloppement (10) ouvert à partir de sa face frontale pour parvenir dans le dispositif ;
un dispositif de fermeture (13 à 16) permettant de fermer l'outil d'enveloppement (10), **caractérisé en ce que** :
l'outil d'enveloppement (10) est un corps creux pouvant être adapté en étant préformé à la forme du tube, qui peut être déformé de manière élastique par un dispositif d'ouverture et de fermeture (13 à 16), lequel corps creux peut être positionné le long du rail en Z (5), de telle sorte que les bords longitudinaux du corps en tôle (11) peuvent être introduits dans le rail en Z (5) lors de l'insertion dans l'outil d'enveloppement (10), et
**en ce que** l'outil d'enveloppement (10) peut être fermé afin d'envelopper le corps en tôle (11), hormis la zone de rail en Z (5), et d'appuyer les bords longitudinaux du corps en tôle (11) sur le rail en Z (5).

11. Dispositif selon la revendication 10, **caractérisé en ce que** la longueur de l'outil d'enveloppement est supérieure à la longueur de corps en tôle à souder.

12. Dispositif selon la revendication 10 ou 11, **caractérisé en ce que** l'outil d'enveloppement entoure le corps en tôle le long de toute sa paroi, hormis la zone de ou à proximité du rail en Z.

13. Dispositif selon la revendication 12, **caractérisé en ce que** l'outil d'enveloppement va jusqu'au rail en Z lors de la fermeture.

14. Dispositif selon l'une quelconque des revendications 10 à 13, **caractérisé en ce que** l'outil d'enveloppement (10) est formé par une section de tôle incurvée tubulaire unique, ou **en ce que** l'outil d'enveloppement est constitué de deux demi-coques (10') reliées par un moyen de raccordement (30), et le cas échéant respectivement dotées de saillies (34, 35) allant jusqu'au rail en Z, en particulier se présentant sous la forme de nervures périphériques.

15. Dispositif selon l'une quelconque des revendications 10 à 14, **caractérisé en ce que** l'outil d'enveloppement est doté d'au moins une butée d'extrémité (28) en saillie dans son espace interne, et de préférence deux butées l'extrémité se trouvant des deux côtés du plan vertical médian, contre lesquels le corps en tôle est poussé lors de l'introduction dans l'outil d'enveloppement.

16. Dispositif selon l'une quelconque des revendications 10 à 15, **caractérisé en ce qu'**on prévoit au moins une butée d'extrémité (31), contre laquelle est poussé le corps en tôle lors de l'introduction dans l'outil d'enveloppement, laquelle butée d'extrémité peut être réglée en termes de positionnement dans le sens de soudage et/ou dans lequel plusieurs butées d'extrémité se trouvant l'une derrière l'autre dans le sens de soudage sont prévues, lesquelles peuvent être positionnées au choix en dépassant dans l'espace interne au choix.

17. Dispositif selon l'une quelconque des revendications 10 à 16, **caractérisé en ce que** l'outil d'enveloppement présente, sur sa face inférieure, au moins une saillie (22) dépassant dans le sens de soudage, sur laquelle peut être posé le corps en tôle à souder lors de l'introduction dans l'outil d'enveloppement.

18. Dispositif selon l'une quelconque des revendications 10 à 17, **caractérisé en ce que** l'outil d'enveloppement présente, du côté frontal, des deux côtés de son plan médian vertical, des évidements (20, 21), qui facilitent l'introduction complète du corps en tôle à l'encontre du sens de soudage dans l'outil d'enveloppement.
